# FASCICULE DE BREVET EUROPEEN

(11) **EP 2 228 987 B1**
(45) Date de publication et mention de la délivrance du brevet: **23.06.2021**
(21) Numéro de dépôt: 10153626.6
(22) Date de dépôt: 15.02.2010
(51) Int. Cl.: H04N 7/15, H04N 7/14

(54) **Système d'interprétation d'un mouvement d'un interlocuteur, procédé et programme d'ordinateur correspondant.**
Interpretationssystem einer Bewegung eines Gesprächspartners, sowie entsprechendes Verfahren und Computerprogrammprodukt
System for interpreting a movement of a party, corresponding method and computer program

(30) Priorité: 12.03.2009 FR 0951553
(43) Date de publication de la demande: 15.09.2010
(73) Titulaire: ORANGE, 75015 Paris (FR)
(72) Inventeur: Petesch, Fabrice, 22300 Lannion (FR)
(74) Mandataire: Vidon Brevets & Stratégie

(56) Documents cités:
- EP-A- 1 039 752
- EP-A- 1 705 911
- WO-A-02/47386
- WO-A-2005/029739
- NAWAZ T ET AL: "Infotainment devices control by eye gaze and gesture recognition fusion", IEEE TRANSACTIONS ON CONSUMER ELECTRONICS, IEEE SERVICE CENTER, NEW YORK, NY, US, vol. 54, no. 2, 1 May 2008 (2008-05-01), pages 277-282, XP011229891, ISSN: 0098-3063, DOI: 10.1109/TCE.2008.4560086
- DOROTHY RACHOVIDES ET AL: "The conductor interaction method", ACM TRANSACTIONS ON MULTIMEDIA COMPUTING COMMUNICATIONS ANDAPPLICATIONS, ASSOCIATION FOR COMPUTING MACHINERY, US, vol. 3, no. 4, 12 December 2007 (2007-12-12), pages 1-23, XP058328099, ISSN: 1551-6857, DOI: 10.1145/1314303.1314312

## Description

### 1 DOMAINE DE L'INVENTION

La présente invention se rapporte au domaine des conférences permettant à des interlocuteurs connectés à une même salle de conférence numérique de dialoguer et de travailler.

De telles salles de conférences numériques utilisent activement des technologies électroniques et informatiques pour permettre, à des interlocuteurs qui sont connectés à un même réseau de communication, de dialoguer, parfois de se voir et de produire une sensation d'immersion au sein d'un environnement de conférence particulier. Ainsi, parmi les techniques utilisées on notera plus particulièrement les techniques de transmission et de réception de flux multimédia audio et/ou vidéo sur des réseaux de type IP (comme par exemple l'Internet), de spatialisation sonore ou encore de synchronisation de flux.

Plus particulièrement, les techniques de spatialisation permettent de situer les interlocuteurs dans l'espace auditif de l'interlocuteur. En règle générale, lors d'une conférence, les interlocuteurs portent un casque audio, de type stéréo. Plusieurs méthodes ont été proposées pour utiliser cet environnement stéréophonique afin de produire un environnement sonore spatialisé, permettant à un interlocuteur de la conférence d'identifier de manière précise au sein de l'espace sonore un autre interlocuteur qui parle.

La présente invention se rapporte plus particulièrement à une méthode permettant aux interlocuteurs d'interagir entre eux lors de la tenue d'une conférence au sein de laquelle une spatialisation sonore est mise en œuvre.

### 2 ART ANTERIEUR

La spatialisation sonore, combinée à un affichage adéquat des interlocuteurs de la conférence sur le terminal de communication offre un grand confort lors de la participation à des conférences. La restitution sonore spatialisée des voix des différents interlocuteurs n'est en effet pas la seule technique utilisée dans les conférences : on utilise également des techniques de placement des interlocuteurs sur l'écran en fonction de la spatialisation sonore. Ces techniques de placement ont pour objectif de positionner une représentation des interlocuteurs en adéquation avec la restitution spatialisée de leurs voix.

Ainsi, l'interlocuteur dispose d'un environnement optimal pour la tenue de la conférence. Par exemple, si l'on imagine une conférence regroupant quatre interlocuteurs, un interlocuteur de cette conférence bénéficiera, à l'aide de la spatialisation sonore, d'une impression de positionnement des trois autres interlocuteurs : le premier sur sa gauche, le deuxième devant lui et le troisième sur sa droite par exemple. Ainsi, lorsque l'un des trois interlocuteurs parlera, celui qui écoute pourra aisément identifier de qui il s'agit. Cette spatialisation sonore pourra être combinée à un positionnement idoine des représentations des trois interlocuteurs à l'écran : la représentation du premier interlocuteur sera positionnée à gauche, celle du deuxième interlocuteur au centre et celle du troisième interlocuteur à droite de l'écran d'un terminal servant à la restitution. Le document WO 02/47386 A1 illustre un exemple d'un tel système de conférence spatialisée dans lequel des interlocuteurs distants sont mis en relation.

Ces représentations peuvent être des avatars, fixes ou animés ou encore des flux vidéos transmis par des caméras en possession des interlocuteurs (par exemple des WebCam connectées à un PC).

Le problème qui se pose est celui de l'interaction entre les interlocuteurs de la conférence. En effet, bien que l'environnement de conférence permette de dialoguer de manière confortable ce qui est son but premier, il ne permet pas à un interlocuteur d'interagir aisément avec une autre autrement que par la parole. Par exemple, si un interlocuteur souhaite faire parvenir un courrier électronique à un autre interlocuteur de la conférence, il doit se rendre sur son application de courrier électronique, saisir l'adresse ou le nom de son interlocuteur, écrire sont courrier et ajouter les éventuelles pièces jointes et enfin envoyer son courrier. Toutes ces étapes ont ainsi été réalisées au détriment de l'attention portée à la conférence par l'interlocuteur.

Il est donc nécessaire de proposer une solution qui permette à un premier interlocuteur d'interagir avec un ou plusieurs autres interlocuteurs de la conférence sans qu'il soit nécessaire au premier interlocuteur de détourner son attention de la conférence.

### 3 RESUME DE L'INVENTION

L'invention ne présente pas ces inconvénients de l'art antérieur. En effet, l'invention concerne un système d'interprétation d'un mouvement d'un premier interlocuteur d'une conférence spatialisée mettant en relation des interlocuteurs distants, selon les revendications 1 à 4.

Ainsi, l'invention permet à un interlocuteur de réaliser des mouvements, qui seront interprétés comme autant d'actions possibles à destination d'un interlocuteur de la conférence spatialisée. Pour ce faire, l'invention propose un système capable de calculer un angle de mouvement, angle qui est corrélé avec la répartition spatiale des interlocuteurs dans la conférence et qui permet de déterminer l'interlocuteur à l'attention duquel le mouvement est destiné. Cet angle permet de reconnaître l'identité de l'interlocuteur auquel le mouvement de rapporte. L'interprétation du mouvement permet quant à elle de déterminer l'action à exécuter vis-à-vis de cet interlocuteur.

Ainsi, l'invention permet de se baser sur des points d'intérêt pour identifier les mouvements de l'interlocuteur. Les points d'intérêt peuvent être divers : il peut s'agir des yeux de l'interlocuteurs, de sa tête, de ses épaules, etc. Les points d'intérêt servent à identifier, sur l'image capturée, des caractéristiques particulières de celle-ci. Une fois ces points d'intérêt identifiés, l'invention identifie le mouvement réalisé en comparant les positions des points d'intérêt au sein des images. Selon une caractéristique particulière de l'invention, en même temps que la position, on calcule également la taille du point d'intérêt. Ceci présente l'avantage de permettre une évaluation tridimensionnelle du mouvement. En effet, l'évaluation de la taille du point d'intérêt permet de déterminer si celui-ci s'approche ou se recule du moyen de capture et donc par interpolation, se recule ou s'avance des interlocuteurs dans l'environnement spatialisé de la conférence.

Ainsi, l'invention permet d'identifier efficacement l'interlocuteur vers lequel le mouvement est destiné. En effet, de part la spatialisation, le système de l'invention connaît, pour un interlocuteur donné, le placement des autres interlocuteurs de la conférence. Cette connaissance porte sur deux plans de placement : le placement sonore (qui produit la spatialisation sonore), et le placement visuel (la disposition des représentations des interlocuteurs sur l'écran du terminal de l'interlocuteur lorsque ce moyen d'affichage est utilisé). On note que, selon l'invention, le placement sonore ou le placement visuel ne sont pas forcément utilisés en combinaison : l'un peut être utilisé et pas l'autre. L'important est de disposer, au sein du système, d'un plan de placement des interlocuteurs. Ce plan de placement permet, à partir d'un point de départ du mouvement et d'un angle décrit par celui-ci, d'identifier un point d'arrivée. Ce point d'arrivée permet par la suite d'estimer, en fonction du plan de placement, l'interlocuteur visé par le mouvement.

Ainsi, l'invention permet de prendre en compte non seulement le destinataire d'un mouvement réalisé par l'interlocuteur, mais également la forme de ce mouvement pour mettre en œuvre une action préalablement déterminée.

L'invention concerne également un procédé d'interprétation d'un mouvement d'un premier interlocuteur d'une conférence spatialisée mettant en relation des interlocuteurs distants, selon la revendication 5.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre le placement visuel des interlocuteurs d'une conférence du point de vue d'un interlocuteur donné, sur un écran ;
- la figure 2 illustre le placement sonore des interlocuteurs d'une conférence du point de vue d'un interlocuteur donné ;
- la figure 3 décrit un mode de réalisation du système de l'invention ;

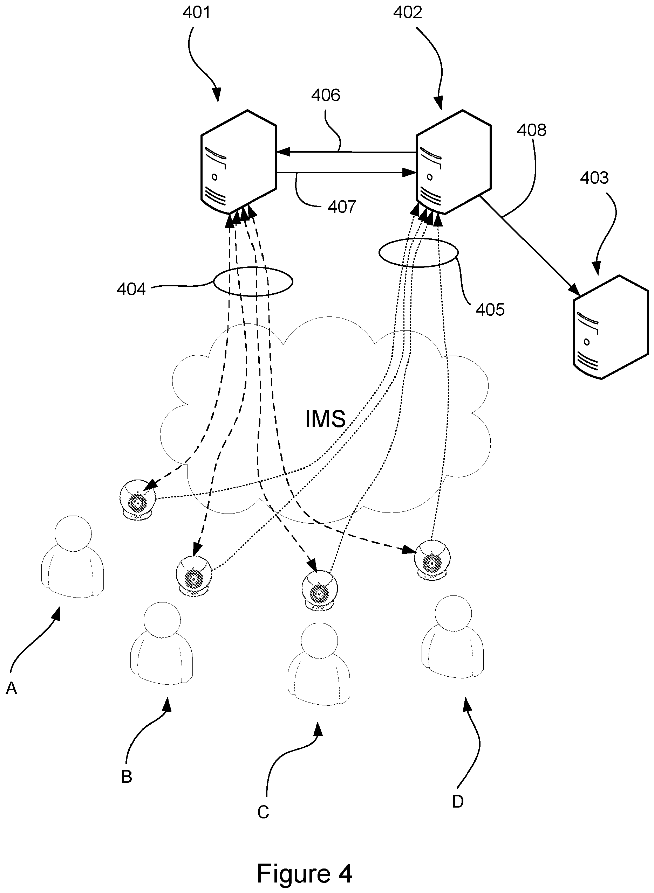

- la figure 4 décrit l'architecture de mise en œuvre du système de l'invention.

### 5 DESCRIPTION DETAILLEE DE L'INVENTION

### 5.1 Rappel du principe de l'invention

L'invention propose de manière générale, d'utiliser les techniques permettant d'analyser les mouvements de l'interlocuteur (un tracker, une caméra) pour détecter ses mouvements, et en fonction de la position ou des mouvements de son regard, de sa tête, de ses mains, de ses yeux ou des ses épaules, de déterminer le destinataire d'une action en cours (mail, rendez vous, partage de fichier etc..).

La mise en place de l'action en cours peut avoir été faite de façon vocale, informatique ou également par un mouvement qui aura été préalablement analysé.

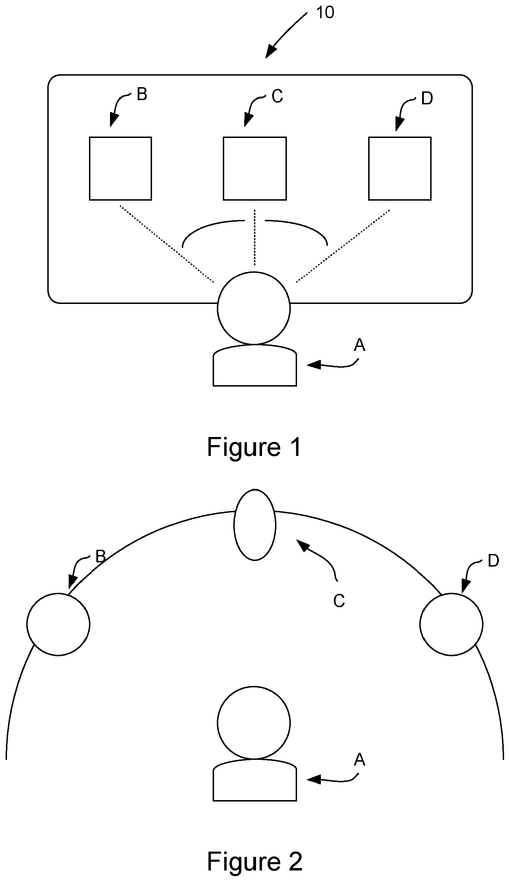

Dans un mode de réalisation de l'invention, une répartition des autres interlocuteurs d'une conférence est réalisée dans un champ visuel de 180 degrés devant l'interlocuteur. Cette répartition est valable autant pour la spatialisation sonore que pour l'affichage des représentations des autres interlocuteurs. Ainsi, par rapport à l'interlocuteur, les autres interlocuteurs sont espacés d'un angle prédéterminé. Par exemple, s'il y a quatre interlocuteurs A, B, C et D, pour l'interlocuteur A, les interlocuteurs B, C et D seront respectivement positionnés à 45°, 90° et 135° dans le champs auditif de l'interlocuteur A et respectivement à gauche, au centre et à droite de l'écran (voir figure 1 pour le placement visuel et la figure 2 pour le placement sonore).

Dans le cadre de l'exemple précédent, en conférence, l'invention permet à l'interlocuteur A de pouvoir réaliser des actions préalablement définies en réalisant certains types de mouvements dont les angles seront calculés en corrélation avec les représentations des interlocuteurs B, C et D dans l'espace sonore et/ou dans l'espace visuel de restitution.

On note que, selon l'invention, il est possible d'utiliser cette technique de manière successive. Ainsi, un premier mouvement ou une première série de mouvements peut être utilisée pour sélectionner et/ou identifier un interlocuteur. Auquel cas, la première action résultante de l'utilisation de l'invention sera de sélectionner l'interlocuteur. La technique de l'invention peut alors être mise en œuvre une deuxième fois pour sélectionner une action spécifique une fois que l'interlocuteur est sélectionné : envoyer un courrier électronique, partager un document, etc.

Selon une première approche, dans un premier mode de réalisation de l'invention, un système de traitement d'image, préférentiellement mis en œuvre dans le terminal de l'interlocuteur, détecte les mouvements ou les variations de position de l'interlocuteur. Cette détection de mouvement peut être réalisée en comparant des images successives obtenues à partir de la caméra et en distinguant, au sein de ces images, des points d'intérêts qui vont faire l'objet d'une analyse de mouvement.

Ces points d'intérêt peuvent par exemple être les yeux de l'interlocuteur, sa tête, ses mains ou ses épaules. Le système peut mettre en œuvre le procédé suivant :
- une étape d'acquisition d'une image représentative de l'interlocuteur ;
- une étape de recherche d'un point d'intérêt préalablement déterminé au sein de cette image ;
- une étape de mémorisation d'une position du point d'intérêt sur l'image acquise ;
- une étape de comparaison de la position du point d'intérêt sur l'image acquise avec une position du point d'intérêt préalablement mémorisée, délivrant une distance ;
et, lorsque ladite étape de comparaison délivre une distance supérieure à un paramètre prédéterminé :
- une étape d'évaluation de la pertinence de la prise en compte de la distance délivrant une valeur de pertinence ;
- une étape de calcul d'un angle de déplacement du point d'intérêt en fonction de la distance préalablement calculée ;
- une étape d'identification d'un interlocuteur vers lequel une action préalablement déterminée doit être mise en œuvre en fonction de l'angle de déplacement ;
- une étape de mise en œuvre de l'action lorsque la valeur de pertinence excède un seuil prédéterminé.

Ainsi, l'invention permet prendre en compte des mouvements, par exemple des mouvements de la tête, des yeux ou des épaules pour mettre en œuvre une action spécifique sans qu'il ait été nécessaire, pour l'interlocuteur, de faire appel à une nouvelle application logicielle ou de se déconcentrer de la conférence.

Selon une deuxième approche, dans un deuxième mode de réalisation de l'invention, l'interlocuteur dispose d'un équipement spécifique qu'il peut utiliser. Cet équipement spécifique peut être par exemple une télécommande, un pointeur laser, ou plus simplement un « sticker » (sorte d'autocollant) positionné sur un doigt par exemple au niveau de la pulpe (extrémité charnue du doigt) et présentant une surface dont les propriétés particulières permettent de le repérer aisément dans une image capturée à l'aide d'une caméra. Dans ce cas, il n'y aura pas de calcul de point d'intérêt dans l'image, mais uniquement une recherche d'un signal représentatif de la présence et du déplacement de l'objet détenu par l'interlocuteur.

Les autres étapes du procédé de l'invention seront mises en œuvre de manière similaire (détermination d'un angle, détermination d'une action...).

Par la suite, on présente un mode de réalisation du système de l'invention.

### 5.2 Description d'un mode de réalisation

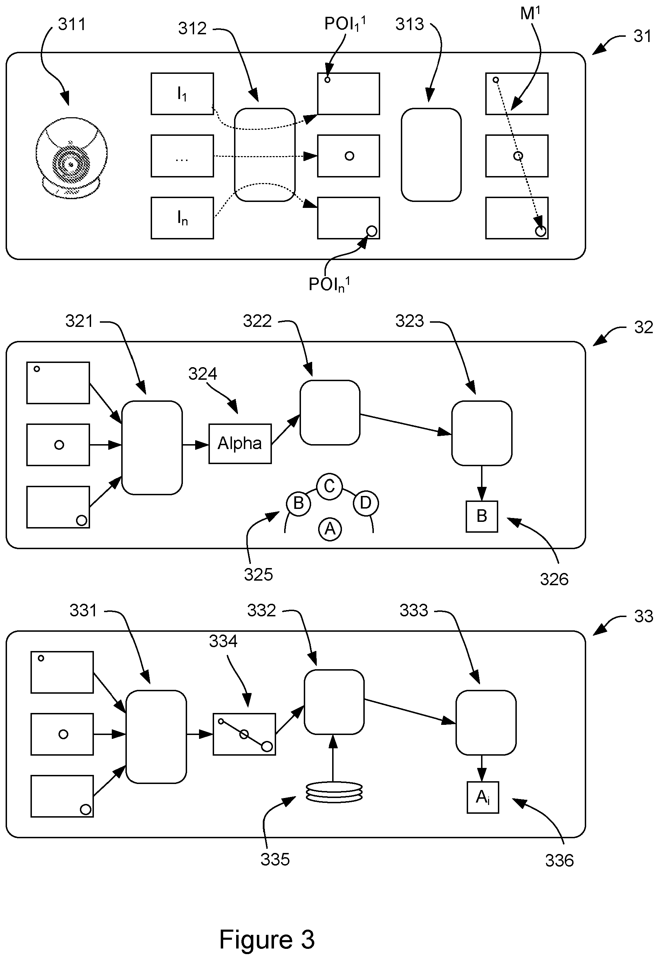

On présente, en relation avec la figure 3, un mode de réalisation d'un système pour la mise en œuvre de l'invention.

Un tel système comprend :
- des moyens de détection 31 d'un mouvement réalisé par le premier interlocuteur ;
- des moyens d'identification 32, au sein des interlocuteurs de la conférence, d'un second interlocuteur à l'attention duquel le mouvement se rapporte en fonction d'un angle 324 défini par le mouvement par rapport à une répartition spatiale des interlocuteurs 325 ;
- des moyens d'initialisation 33 d'une action à entreprendre en fonction du mouvement identifié 334 et de l'interlocuteur reconnu.

Ainsi, dans ce mode de réalisation de l'invention, on détecte les mouvements pour pouvoir ensuite les interpréter, sommairement. Il ne s'agit pas en effet, de reconnaître finement des mots du langage des signes, mais plus simplement un mouvement élémentaire tel qu'un mouvement de translation des yeux ou un mouvement de rotation des épaules. Pour se faire, selon un mode de réalisation complémentaire de l'invention (non représenté) on procède, préalablement à la détection *in situ,* à une phase d'apprentissage dans laquelle le système demande à l'interlocuteur d'effectuer les mouvements, par exemple des mouvements des yeux, des épaules, d'un ou plusieurs doigts, afin de mémoriser les caractéristiques de l'interlocuteur. Cette phase d'apprentissage est décrite par la suite.

Les moyens de détection de mouvement 31 comprennent :
- des moyens d'obtention 311 d'au moins deux images du premier interlocuteur (I₁ à Iₙ) à l'aide des moyens de capture ;
- des moyens de détermination 312 de points d'intérêts (POI₁¹, POIₙ^{1,}) au sein des images capturées ;
- des moyens d'identification 313 du mouvement (M¹) par comparaison des points d'intérêts préalablement déterminés.

Ainsi, l'invention permet de traiter efficacement les mouvements qui sont produits par l'interlocuteur. En effet, il est très fréquent que l'interlocuteur réalise des mouvements devant sa webcam. De tels mouvements seront, dans la plupart des cas non significatifs pour le système de l'invention : l'interlocuteur peut très bien se frotter l'œil, par exemple, sans que cela doive avoir une signification pour le système. Pour ce faire, l'invention utilise des points d'intérêt dans l'image. Par souci de simplification, la détection d'un seul point d'intérêt a été décrite en relation avec la figure 3. Bien entendu, le système de l'invention sait détecter et suivre plusieurs points d'intérêts dans l'image de sorte que cette combinaison de points d'intérêt puisse être utilisée pour affiner les mouvements détectés : par exemple, chaque œil de l'interlocuteur constitue un point d'intérêt. Lors de la détection du mouvement, le système de l'invention va chercher à faire concorder les mouvements identifiés : si les deux yeux produisent un même mouvement, alors cela peut bien être interprété comme un mouvement permettant de générer une action. Si un œil seulement produit un mouvement et que l'autre est masqué par une main, par exemple, cela signifie vraisemblablement que le mouvement ne doit pas être pris en compte. Les images (I₁ à Iₙ) qui sont obtenues à partir des moyens de captures 311, sont traitées pour identifier les points d'intérêts (POI₁¹, POIₙ^{1,}). Cette identification sera d'autant plus simple que la phase d'apprentissage préalable aura été réalisée correctement. On détermine un mouvement par point d'intérêt identifié. Si on identifie trois points d'intérêt, on déterminera trois mouvements. L'important dans ce dernier cas étant que les mouvements ne soient pas contradictoires : selon l'invention, deux mouvements différents (par exemple un mouvement des yeux et un mouvement des épaules) peuvent conduire à l'exécution de la même action. Si lors de la détection des mouvements, un premier mouvement tend à faire sélectionner un interlocuteur B tandis que l'autre mouvement tend à faire sélectionner un interlocuteur D, alors aucun de ces deux mouvements ne sera retenu et aucune action ne sera entreprise.

Les moyens d'identification d'un interlocuteur destinataire du mouvement 32 comprennent :
- des moyens 321 de calcul de l'angle du mouvement à l'aide des points d'intérêt préalablement identifiés ;
- des moyens 322 de comparaison de l'angle calculé avec la répartition spatiale 325 des interlocuteurs en tenant compte d'un point de départ du mouvement ;
- des moyens d'estimation 323 d'un point d'arrivée du mouvement par rapport à la répartition spatiale des interlocuteurs, définissant le second interlocuteur 326.

Ainsi, l'invention permet de calquer l'angle du mouvement avec la position des autres interlocuteurs dans le champ auditif de l'interlocuteur qui produit le mouvement et de déterminer un destinataire du mouvement. Pour ce faire, les coordonnées successives du point d'intérêt considéré sont reportées dans un repère. Par exemple, on considère trois images au sein desquelles un point d'intérêt a successivement les coordonnées *{x,y}* suivantes *c1*=*{10,20}, c2*=*{15,15}* et *c3*=*{20,10}, x* représentant l'abscisse et *y* l'ordonnée. L'angle horizontal du mouvement sera calculé en reportant seulement les abscisses successives sur un repère dont la longueur est égale à la largeur des images obtenues à l'aide de la webcam : *{10, 15 et 20}.* En considérant d'une part la distance « *d* » du point d'intérêt avec la « webcam » et d'autre part la largeur du repère, on calcule l'angle du mouvement. Ensuite, en fonction de la position de départ de l'angle, on estime l'interlocuteur destinataire à l'aide de la formule mathématique idoine *(r²*=*x²+d²)* ou *r* est la coordonnée polaire de l'interlocuteur destinataire.

Les moyens d'initialisation 33 d'une action comprennent :
- des moyens de reconnaissance 331 d'une forme 334 dessinée par le mouvement ;
- des moyens d'association 332 de la forme 334 du mouvement à une action préalablement déterminée 335 ;
- des moyens de transfert 333 d'une commande d'initialisation de l'action 336 à une entité associée à l'action.

Les moyens de reconnaissance de la forme mettent également en œuvre le principe de fusion, au sein d'une même image, du point d'intérêt identifié. Pour ce faire, les moyens de reconnaissance positionnent, au sein d'une image vierge, les coordonnées successives du point d'intérêt. Puis, à l'aide de ces coordonnées, on met en œuvre des moyens de reconnaissance de forme. Ici encore, pour être rapide et efficace, les inventeurs ont eu l'idée de faire correspondre la forme à un apprentissage préalable de la forme par le système. Ainsi, on compare les formes des points d'intérêts aux formes enregistrées lors de la phase d'apprentissage.

Selon l'invention, il est possible pour faciliter la reconnaissance des mouvements par le système, de disposer d'une phase d'apprentissage. Cette phase d'apprentissage a pour particularité de demander à l'utilisateur d'effectuer des gestes et des mouvements bien précis pour que le système soit à même de reconnaître ces mouvements de manière plus aisée par la suite. Cette phase d'apprentissage permet de constituer une base de données de mouvements qui sera utilisée par la suite par le système.

Dans le mode de réalisation présenté, l'invention met en œuvre un système de capture visuel. Il est tout à fait envisageable, dans un mode de réalisation alternatif de l'invention, de faire intervenir des moyens de capture sonores. Dans ce mode de réalisation dit « sonore », l'invention met en œuvre de moyens de capture et de reconnaissance basé sur les paroles prononcées par l'utilisateur. Lorsque l'utilisateur souhaite réaliser une action, il coupe la transmission du flux audio. Le flux audio n'est donc plus transmis aux autres interlocuteurs. Il peut ainsi prononcer des directives de mise en œuvre d'actions qui seront reconnues par le système et qui produiront la réalisation des actions. Les directives audio sont transmises au serveur, par le biais de la connexion IMS et le serveur se charge de réaliser les traitements adéquats pour réaliser l'action demandée.

### 5.3 Autres caractéristiques optionnelles et avantages

On présente ci-après un mode de réalisation de l'invention au sein d'un réseau de communication de type implémentant les protocoles de communication SIP/IMS (de l'anglais pour « Session Initiation Protocol » et de l'anglais pour « IP Multimedia Subsystem »). Dans ce mode de réalisation de l'invention, le réseau IMS comprend un serveur de gestion de conférence spatialisé (401), un serveur de détection de mouvement (402) et un serveur d'application (403) permettant de réaliser ou d'initier un nombre prédéterminé d'actions. Les interlocuteurs de la conférence (A, B C et D) entrent en conférence. Les flux audio et/ou vidéo sont dirigés (404) vers le serveur de gestion de conférence spatialisée (401) qui gère pour chacun des interlocuteurs, leurs répartitions au sein des espaces de représentation des interlocuteurs (spatialisation de l'audio et/ou positionnement des représentations graphiques ou des vidéos). Dans ce mode de réalisation, les flux vidéos sont également réceptionnés (405) par le serveur de détection de mouvement (402). Ce dernier est chargé de détecter, selon le procédé préalablement décrit, les mouvements des interlocuteurs de la conférence.

Dans ce mode de réalisation, le serveur de détection de mouvement (402) calcule les mouvements et les angles (à l'aide des moyens idoines) et demande (406) au serveur de gestion de la conférence (401) l'identité du destinataire de l'action. Ce dernier lui répond (407) en lui fournissant par exemple le numéro de téléphone de l'interlocuteur.

Selon une première variante, dans ce mode de réalisation de l'invention, des messages SIP Info aux contenus spécifiques sont échangés entre le serveur de gestion et le serveur de détection pour récupérer cette information (par exemple, le message INFO émis par le serveur de détection de mouvement (402) contient le callID de la session SIP et l'angle du geste et le message de réponse du serveur de conférence contient le numéro de téléphone du destinataire). Selon une première variante, dans ce mode de réalisation de l'invention, on utilise une API HTTP ou SOAP qui en entrée Indique le callID de la session SIP et l'angle du geste, et en sortie le n° de téléphone du destinataire. Les différences entre ces deux variantes tiennent à la manière de communiquer entre les deux serveurs.

L'étape suivante consiste à identifier l'action à mettre en œuvre. Pour ce faire, le serveur de détection de mouvement (402) entre en relation (408) avec l'interlocuteur initiateur du mouvement pour identifier au sein de son environnement de conférence l'action à réaliser. Dans une variante de ce mode de réalisation, les actions possibles sont prédéfinies, pour chaque interlocuteur, au sein d'une entité du réseau IMS.

Pour finir, le serveur de détection de mouvement (402) requiert l'exécution de l'action auprès du serveur concerné 403. L'implémentation dédiée est liée au serveur concerné et n'est pas décrite ici, car elle diffère à chaque fois. Il peut s'agir par exemple de l'utilisation d'une requête HTTP pour déclencher l'envoi d'un SMS ou d'un courrier électronique.

## Revendications

1. Système d'interprétation d'un mouvement d'un premier interlocuteur d'une conférence spatialisée mettant en relation des interlocuteurs distants, ledit système comprenant, pour ledit premier interlocuteur, des moyens délivrant une répartition spatiale (325) desdits interlocuteurs de ladite conférence, des moyens de capture d'un flux vidéo dudit premier interlocuteur, système **caractérisé en ce qu'**il comprend :
- des moyens d'obtention d'une pluralité d'images successives dudit premier interlocuteur, au sein dudit flux vidéo ;
- des moyens de recherche de points d'intérêt préalablement déterminés dudit premier interlocuteur, au sein desdites images dudit premier interlocuteur obtenues, lesdits points d'intérêt appartenant au groupe comprenant une main, une épaule, la tête, un œil dudit premier interlocuteur, délivrant différentes positions successives desdits points d'intérêt préalablement déterminés au sein desdites images dudit premier interlocuteur obtenues ;
- pour chaque point d'intérêt préalablement déterminé dudit premier interlocuteur:
- des moyens d'identification d'un mouvement réalisé par ledit premier interlocuteur et associé audit point d'intérêt considéré, par comparaison des positions successives dudit point d'intérêt dudit premier interlocuteur au sein desdites images dudit premier interlocuteur obtenues ;
- des moyens de calcul d'un angle de déplacement dudit point d'intérêt considéré, ledit angle de déplacement étant calculé en fonction d'une distance obtenue par comparaison de la position dudit point d'intérêt sur une image obtenue avec une position dudit point d'intérêt préalablement mémorisée, lesdits moyens de calcul délivrant un angle associé audit mouvement ;
- des moyens d'identification (32), au sein desdits interlocuteurs de ladite conférence, d'un interlocuteur à l'attention duquel ledit mouvement dudit premier interlocuteur se rapporte, par corrélation dudit angle (324) associé audit mouvement avec ladite répartition spatiale (325) desdits interlocuteurs ; et
- lorsque lesdits moyens d'identification d'un interlocuteur n'identifient pas, pour les points d'intérêt préalablement déterminés, des interlocuteurs différents, des moyens d'initialisation (33) d'une action à exécuter vis-à-vis de l'interlocuteur identifié par lesdits moyens d'identification, dit second interlocuteur, ladite action étant identifiée au sein d'un environnement de conférence dudit premier interlocuteur, lesdits moyens d'initialisation comprenant des moyens de reconnaissance, pour un mouvement déterminé dudit premier interlocuteur associé à un des points d'intérêt préalablement déterminés, d'une forme obtenue par agrégation au sein d'une image vierge des positions successives dudit point d'intérêt au sein desdites images dudit premier interlocuteur obtenues, par comparaison avec des formes enregistrées préalablement, des moyens d'obtention d'une action préalablement associée à ladite forme reconnue, ladite action étant destinée à être exécutée vis-à-vis du second interlocuteur, et des moyens de transfert d'une commande d'initialisation de ladite action à une entité apte à exécuter ladite action.

2. Système selon la revendication 1 **caractérisé en ce que** lesdits moyens de d'identification dudit second interlocuteur comprennent :
- des moyens de comparaison dudit angle associé audit mouvement dudit premier interlocuteur avec ladite répartition spatiale desdits interlocuteurs en tenant compte d'un point de départ dudit mouvement dudit premier interlocuteur ;
- des moyens d'estimation d'un point d'arrivée dudit mouvement dudit premier interlocuteur par rapport à ladite répartition spatiale desdits interlocuteurs, définissant ledit second interlocuteur.

3. Système selon la revendication 1, **caractérisé en ce que** lesdits moyens de reconnaissance d'une forme comprennent :
- des moyens de création de ladite forme en agrégeant lesdits points d'intérêt déterminés dudit premier interlocuteur au sein d'une seule image ;
- des moyens de comparaison de ladite forme avec une base de données comprenant des formes et des actions associées, délivrant ladite action.

4. Système selon la revendication 1, **caractérisé en ce que** lesdits moyens de spatialisation, lesdits moyens de capture d'un flux vidéo, lesdits moyens d'identification des mouvements, lesdits moyens de reconnaissance d'interlocuteurs et lesdits des moyens d'initialisation d'une action à exécuter sont implémentés au sein d'un réseau de communication de type IMS.

5. Procédé d'interprétation d'un mouvement d'un premier interlocuteur d'une conférence spatialisée mettant en relation des interlocuteurs distants, ledit procédé comprenant, pour ledit premier interlocuteur, une phase délivrant une répartition spatiale desdits interlocuteurs de ladite conférence, une phase de capture d'un flux vidéo dudit premier interlocuteur, procédé **caractérisé en ce qu'**il comprend :
- une étape d'obtention d'une pluralité d'images successives dudit premier interlocuteur, au sein dudit flux vidéo ;
- une étape de recherche de points d'intérêt préalablement déterminés dudit premier interlocuteur, au sein desdites images dudit premier interlocuteur obtenues, lesdits points d'intérêt appartenant au groupe comprenant une main, une épaule, la tête, un œil dudit premier interlocuteur, délivrant différentes positions successives desdits points d'intérêt préalablement déterminés au sein desdites images dudit premier interlocuteur obtenues ;
- pour chaque point d'intérêt préalablement déterminé dudit premier interlocuteur:
- une étape d'identification d'un mouvement réalisé par ledit premier interlocuteur et associé audit point d'intérêt considéré, par comparaison des positions successives dudit point d'intérêt dudit premier interlocuteur au sein desdites images dudit premier interlocuteur obtenues ;
- une étape de calcul d'un angle de déplacement dudit point d'intérêt considéré, ledit angle de déplacement étant calculé en fonction d'une distance obtenue par comparaison de la position dudit point d'intérêt sur une image obtenue avec une position dudit point d'intérêt préalablement mémorisée, ladite étape de calcul délivrant un angle associé audit mouvement ;
- une étape d'identification, au sein desdits interlocuteurs de ladite conférence, d'un interlocuteur à l'attention duquel ledit mouvement dudit premier interlocuteur se rapporte, par corrélation dudit angle associé audit mouvement avec ladite répartition spatiale desdits interlocuteurs ; et
- lorsque ladite étape d'identification d'un interlocuteur n'identifie pas, pour les points d'intérêt préalablement déterminés, des interlocuteurs différents, une étape d'initialisation d'une action à exécuter vis-à-vis de l'interlocuteur identifié lors de ladite étape d'identification, dit second interlocuteur, ladite action étant identifiée au sein d'un environnement de conférence dudit premier interlocuteur, ladite étape d'initialisation comprenant une étape de reconnaissance, pour un mouvement déterminé dudit premier interlocuteur associé à un des points d'intérêt préalablement déterminés, d'une forme obtenue par agrégation au sein d'une image vierge des positions successives dudit point d'intérêt au sein desdites images dudit premier interlocuteur obtenues, par comparaison avec des formes enregistrées préalablement, une étape d'obtention d'une action préalablement associée à ladite forme reconnue, ladite action étant destinée à être exécutée vis-à-vis du second interlocuteur, et une étape de transfert d'une commande d'initialisation de ladite action à une entité apte à exécuter ladite action.

6. Programme d'ordinateur **caractérisé en ce qu'**il comprend des instructions de code de programme pour la mise en œuvre du procédé d'interprétation selon la revendication 5, lorsque ce programme est exécuté par un processeur.

## Patentansprüche

1. System zur Interpretation einer Bewegung eines ersten Gesprächspartners einer räumlich dargestellten Konferenz, die entfernte Gesprächspartner miteinander in Verbindung setzt, wobei das System für den ersten Gesprächspartner Mittel, die eine räumliche Verteilung (325) der Gesprächspartner der Konferenz liefern, Mittel zur Aufnahme eines Videostroms des ersten Gesprächspartners umfasst, wobei das System **dadurch gekennzeichnet ist, dass** es Folgendes umfasst:
- Mittel zum Erhalten von mehreren aufeinanderfolgenden Bildern des ersten Gesprächspartners innerhalb des Videostroms;
- Mittel zur Suche nach zuvor bestimmten Punkten von Interesse des ersten Gesprächspartners innerhalb der erhaltenen Bilder des ersten Gesprächspartners, wobei die Punkte von Interesse zu der Gruppe gehören, die eine Hand, eine Schulter, den Kopf, ein Auge des ersten Gesprächspartners umfasst, die unterschiedliche aufeinanderfolgende Positionen der zuvor bestimmten Punkte von Interesse innerhalb der erhaltenen Bilder des ersten Gesprächspartners liefern;
- für jeden zuvor bestimmten Punkt von Interesse des ersten Gesprächspartners:
- Mittel zur Identifikation einer Bewegung, die von dem ersten Gesprächspartner ausgeführt wird und die dem betrachteten Punkt von Interesse zugeordnet ist, durch Vergleichen von aufeinanderfolgenden Positionen des Punkts von Interesse des ersten Gesprächspartners innerhalb der erhaltenen Bilder des ersten Gesprächspartners;
- Mittel zur Berechnung eines Verschiebungswinkels des betrachteten Punkts von Interesse, wobei der Verschiebungswinkel in Abhängigkeit von einem Abstand berechnet wird, der durch Vergleichen der Position des Punkts von Interesse auf einem erhaltenen Bild mit einer zuvor gespeicherten Position des Punkts von Interesse erhalten wird, wobei die Mittel zur Berechnung einen Winkel liefern, der der Bewegung zugeordnet ist;
- Mittel zur Identifikation (32), innerhalb der Gesprächspartner der Konferenz, eines Gesprächspartners, auf den sich die Bewegung des ersten Gesprächspartners bezieht, durch Korrelation des Winkels (324), der der Bewegung zugeordnet ist, mit der räumlichen Verteilung (325) der Gesprächspartner; und
- wenn die Mittel zur Identifikation eines Gesprächspartners für die zuvor bestimmten Punkte von Interesse keine unterschiedlichen Gesprächspartner identifizieren, Mittel zur Initialisierung (33) einer Aktion, die gegenüber dem Gesprächspartner auszuführen ist, der durch die Mittel zur Identifikation identifiziert wurde, zweiter Gesprächspartner genannt, wobei die Aktion innerhalb einer Konferenzumgebung des ersten Gesprächspartners identifiziert wird, wobei die Mittel zur Initialisierung Mittel zur Erkennung einer Form, durch Vergleichen mit zuvor aufgezeichneten Formen, die durch Aggregation, innerhalb eines neuen Bilds, von aufeinanderfolgenden Positionen des Punkts von Interesse innerhalb der erhaltenen Bilder des ersten Gesprächspartners erhalten wird, für eine bestimmte Bewegung des ersten Gesprächspartners, die einem der zuvor bestimmten Punkte von Interesse zugeordnet ist, Mittel zum Erhalten einer Aktion, die der erkannten Form zuvor zugeordnet wurde, wobei die Aktion dazu bestimmt ist, gegenüber dem zweiten Gesprächspartner ausgeführt zu werden, und Mittel zur Übertragung eines Initialisierungsbefehls der Aktion an eine Einheit umfassen, die dazu geeignet ist, die Aktion auszuführen.

2. System nach Anspruch 1, **dadurch gekennzeichnet, dass** die Mittel zur Identifikation des zweiten Gesprächspartners Folgendes umfassen:
- Mittel zum Vergleichen des Winkels, der der Bewegung des ersten Gesprächspartners zugeordnet ist, mit der räumlichen Verteilung der Gesprächspartner unter Berücksichtigung eines Anfangspunkts der Bewegung des ersten Gesprächspartners;
- Mittel zur Abschätzung eines Endpunkts der Bewegung des ersten Gesprächspartners in Bezug auf die räumliche Verteilung der Gesprächspartner, die den zweiten Gesprächspartner definieren.

3. System nach Anspruch 1, **dadurch gekennzeichnet, dass** die Mittel zur Erkennung einer Form Folgendes umfassen:
- Mittel zur Erzeugung der Form durch Aggregation der bestimmten Punkte von Interesse des ersten Gesprächspartners innerhalb eines einzelnen Bilds;
- Mittel zum Vergleichen der Form mit einer Datenbank, die Formen und zugeordnete Aktionen umfasst, die die Aktion liefern.

4. System nach Anspruch 1, **dadurch gekennzeichnet, dass** die Mittel zur räumlichen Verteilung, die Mittel zur Aufnahme eines Videostroms, die Mittel zur Identifikation von Bewegungen, die Mittel zur Erkennung von Gesprächspartnern und die Mittel zur Initialisierung einer auszuführenden Aktion innerhalb eines IMS-Kommunikationsnetzes implementiert sind.

5. Verfahren zur Interpretation einer Bewegung eines ersten Gesprächspartners einer räumlich dargestellten Konferenz, die entfernte Gesprächspartner miteinander in Verbindung setzt, wobei das Verfahren für den ersten Gesprächspartner eine Phase, die eine räumliche Verteilung der Gesprächspartner der Konferenz liefert, eine Phase der Aufnahme eines Videostroms des ersten Gesprächspartners umfasst, wobei das Verfahren **dadurch gekennzeichnet ist, dass** es Folgendes umfasst:
- einen Schritt des Erhaltens von mehreren aufeinanderfolgenden Bildern des ersten Gesprächspartners innerhalb des Videostroms;
- einen Schritt der Suche nach zuvor bestimmten Punkten von Interesse des ersten Gesprächspartners innerhalb der erhaltenen Bilder des ersten Gesprächspartners, wobei die Punkte von Interesse zu der Gruppe gehören, die eine Hand, eine Schulter, den Kopf, ein Auge des ersten Gesprächspartners umfasst, der unterschiedliche aufeinanderfolgende Positionen der zuvor bestimmten Punkte von Interesse innerhalb der erhaltenen Bilder des ersten Gesprächspartners liefert;
- für jeden zuvor bestimmten Punkt von Interesse des ersten Gesprächspartners:
- einen Schritt der Identifikation einer Bewegung, die von dem ersten Gesprächspartner ausgeführt wird und die dem betrachteten Punkt von Interesse zugeordnet ist, durch Vergleichen von aufeinanderfolgenden Positionen des Punkts von Interesse des ersten Gesprächspartners innerhalb der erhaltenen Bilder des ersten Gesprächspartners;
- einen Schritt der Berechnung eines Verschiebungswinkels des betrachteten Punkts von Interesse, wobei der Verschiebungswinkel in Abhängigkeit von einem Abstand berechnet wird, der durch Vergleichen der Position des Punkts von Interesse auf einem erhaltenen Bild mit einer zuvor gespeicherten Position des Punkts von Interesse erhalten wird, wobei der Schritt der Berechnung einen Winkel liefert, der der Bewegung zugeordnet ist;
- einen Schritt der Identifikation, innerhalb der Gesprächspartner der Konferenz, eines Gesprächspartners, auf den sich die Bewegung des ersten Gesprächspartners bezieht, durch Korrelation des Winkels, der der Bewegung zugeordnet ist, mit der räumlichen Verteilung der Gesprächspartner; und
- wenn der Schritt der Identifikation eines Gesprächspartners für die zuvor bestimmten Punkte von Interesse keine unterschiedlichen Gesprächspartner identifiziert, einen Schritt der Initialisierung einer Aktion, die gegenüber dem Gesprächspartner auszuführen ist, der durch den Schritt der Identifikation identifiziert wurde, zweiter Gesprächspartner genannt, wobei die Aktion innerhalb einer Konferenzumgebung des ersten Gesprächspartners identifiziert wird, wobei der Schritt der Initialisierung einen Schritt der Erkennung einer Form, durch Vergleichen mit zuvor aufgezeichneten Formen, die durch Aggregation, innerhalb eines neuen Bilds, von aufeinanderfolgenden Positionen des Punkts von Interesse innerhalb der erhaltenen Bilder des ersten Gesprächspartners erhalten wird, für eine bestimmte Bewegung des ersten Gesprächspartners, die einem der zuvor bestimmten Punkte von Interesse zugeordnet ist, einen Schritt des Erhaltens einer Aktion, die der erkannten Form zuvor zugeordnet wurde, wobei die Aktion dazu bestimmt ist, gegenüber dem zweiten Gesprächspartner ausgeführt zu werden, und einen Schritt der Übertragung eines Initialisierungsbefehls der Aktion an eine Einheit umfasst, die dazu geeignet ist, die Aktion auszuführen.

6. Computerprogramm, **dadurch gekennzeichnet, dass** es Programmcodeanweisungen zur Ausführung des Interpretationsverfahrens nach Anspruch 5, wenn das Programm von einem Prozessor ausgeführt wird, umfasst.

## Claims

1. System for interpreting a movement of a first speaker in a spatialized conference bringing remote speakers into contact, said system comprising, for said first speaker, delivery means delivering a spatial distribution (325) of said speakers in said conference, capturing means for capturing a video stream of said first speaker, which system is **characterized in that** it comprises:
- obtainment means for obtaining a plurality of successive images of said first speaker, within said video stream;
- searching means for searching for previously determined points of interest of said first speaker, within said obtained images of said first speaker, said points of interest belonging to the group comprising a hand, a shoulder, the head and an eye of said first speaker, delivering various successive positions of said previously determined points of interest within said obtained images of said first speaker;
- for each previously determined point of interest of said first speaker:
- identification means for identifying a movement performed by said first speaker and associated with said point of interest under consideration, by comparing successive positions of said point of interest of said first speaker within said obtained images of said first speaker;
- calculation means for calculating an angle of displacement of said point of interest under consideration, said angle of displacement being calculated on the basis of a distance obtained by comparing the position of said point of interest in an obtained image with a previously stored position of said point of interest, said calculation means delivering an angle associated with said movement;
- identification means (32) for identifying, within said speakers in said conference, a speaker for whose attention said movement of said first speaker relates, by correlating said angle (324) associated with said movement with said spatial distribution (325) of said speakers; and
- when said identification means for identifying a speaker do not identify different speakers for the previously determined points of interest, initialization means (33) for initializing an action to be executed with respect to the speaker identified by said identification means, called second speaker, said action being identified within a conference environment of said first speaker, said initialization means comprising recognition means for recognizing, for a determined movement of said first speaker associated with one of the previously determined points of interest, a shape obtained by aggregating, within a clean image, successive positions of said point of interest within said obtained images of said first speaker, through comparison with previously recorded shapes, obtainment means for obtaining an action previously associated with said recognized shape, said action being intended to be executed with respect to the second speaker, and transfer means for transferring a command to initialize said action to an entity able to execute said action.

2. System according to Claim 1, **characterized in that** said identification means for identifying said second speaker comprise:
- comparison means for comparing said angle associated with said movement of said first speaker with said spatial distribution of said speakers, taking into account a starting point of said movement of said first speaker;
- estimation means for estimating a point of arrival of said movement of said first speaker with respect to said spatial distribution of said speakers, defining said second speaker.

3. System according to Claim 1, **characterized in that** said shape recognition means comprise:
- creation means for creating said shape by aggregating said determined points of interest of said first speaker within a single image;
- comparison means for comparing said shape with a database comprising shapes and associated actions, delivering said action.

4. System according to Claim 1, **characterized in that** said spatialization means, said capturing means for capturing a video stream, said movement identification means, said speaker recognition means and said initialization means for initializing an action to be executed are implemented within an IMS communication network.

5. Method for interpreting a movement of a first speaker in a spatialized conference bringing remote speakers into contact, said method comprising, for said first speaker, a phase delivering a spatial distribution of said speakers in said conference, a phase of capturing a video stream of said first speaker, which method is **characterized in that** it comprises:
- a step of obtaining a plurality of successive images of said first speaker, within said video stream;
- a step of searching for previously determined points of interest of said first speaker, within said obtained images of said first speaker, said points of interest belonging to the group comprising a hand, a shoulder, the head and an eye of said first speaker, delivering various successive positions of said previously determined points of interest within said obtained images of said first speaker;
- for each previously determined point of interest of said first speaker:
- a step of identifying a movement performed by said first speaker and associated with said point of interest under consideration, by comparing successive positions of said point of interest of said first speaker within said obtained images of said first speaker;
- a step of calculating an angle of displacement of said point of interest under consideration, said angle of displacement being calculated on the basis of a distance obtained by comparing the position of said point of interest in an obtained image with a previously stored position of said point of interest, said calculation step delivering an angle associated with said movement;
- a step of identifying, within said speakers in said conference, a speaker for whose attention said movement of said first speaker relates, by correlating said angle associated with said movement with said spatial distribution of said speakers; and
- when said step of identifying a speaker does not identify different speakers for the previously determined points of interest, a step of initializing an action to be executed with respect to the speaker identified in said identification step, called second speaker, said action being identified within a conference environment of said first speaker, said initialization step comprising a step of recognizing, for a determined movement of said first speaker associated with one of the previously determined points of interest, a shape obtained by aggregating, within a clean image, successive positions of said point of interest within said obtained images of said first speaker, through comparison with previously recorded shapes, a step of obtaining an action previously associated with said recognized shape, said action being intended to be executed with respect to the second speaker, and a step of transferring a command to initialize said action to an entity able to execute said action.

6. Computer program, **characterized in that** it comprises program code instructions for implementing the interpretation method according to Claim 5 when this program is executed by a processor.
